# EUROPEAN PATENT APPLICATION

(11) **EP 3 643 557 A1**
(43) Date of publication of application: **29.04.2020**
(21) Application number: 19185602.0
(22) Date of filing: 10.07.2019
(51) Int. Cl.: B60L 53/80

(54) **CLIENT PROVIDED BATTERY FOR AN AUTOMATED-TAXI**

(30) Priority: 23.07.2018 US 201862702011 P; 24.07.2018 US 201816043927
(71) Applicant: Aptiv Technologies Limited, St. Michael (BB)
(72) Inventor: Laur, Michael H., Mission Viejo, CA California 92692 (US); Krupadanam, Ashish S., San Rammon, CA California 94582 (US); Mangal, Nandita, Los Altos, CA 94024 (US)
(74) Representative: Manitz Finsterwald Patent- und Rechtsanwaltspartnerschaft mbB

(57) **Abstract**

A transportation system (10) for operating an automated-taxi (12) includes a power-connection (18) and a controller-circuit (20). The power-connection (18) is used to establish an electrical-connection between an automated-taxi (12) and a charged-battery (16) that was brought to the automated-taxi (12) by a client (14) of the automated-taxi (12). The charged-battery (16) provides electrical-energy to propel the automated-taxi (12) while connected. The controller-circuit (20) is in communication with the power-connection (18). The controller-circuit (20) is configured to assess a fee (26) for transporting the client (14) to a destination (28) by the automated-taxi (12). The fee (26) is determined in accordance with an energy-value (30) drawn from the charged-battery (16) while the client (14) is being transported.

## Description

### TECHNICAL FIELD OF INVENTION

This disclosure generally relates to a transportation system for operating an automated-taxi, and more particularly relates to a system that assesses a fee for transporting the client to a destination by the automated-taxi, where the fee is determined in accordance with an energy-value drawn from a charged-battery provided by the client.

### BACKGROUND OF INVENTION

Battery powered automated-taxis are known. However, the one or more batteries used to propel the automated-taxi require recharging, which may temporarily take the automated-taxi out of service.

### BRIEF DESCRIPTION OF DRAWINGS

The present invention will now be described, by way of example with reference to the accompanying drawings, in which:
Fig. 1 is a diagram of a transportation system for operating an automated-taxi in accordance with one embodiment; and
Fig. 2 is a scenario encountered by the system of Fig. 1 in accordance with one embodiment.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

'One or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for describing embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

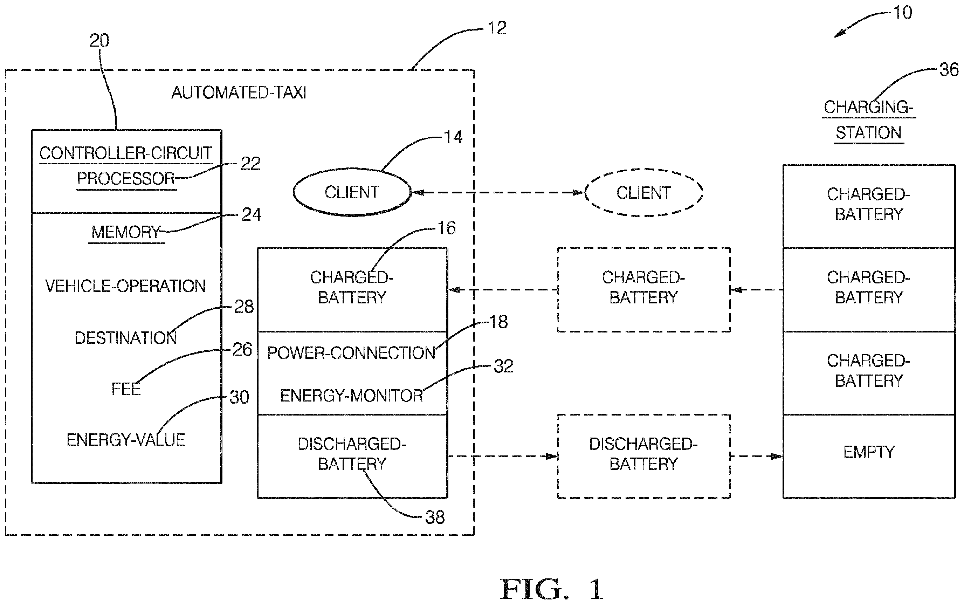

Fig. 1 illustrates a non-limiting example of a transportation system 10, hereafter often referred to as the system 10, for operating an automated-taxi 12, which some may refer to as an automated-mobility-on-demand (AMOD) type of vehicle. The automated-taxi 12 may be characterized as an automated vehicle. As used herein, the term automated vehicle may apply to instances when the automated-taxi 12 is being operated in an automated-mode, i.e. a fully autonomous mode, where a client 14 (i.e. a customer or passenger) of the automated-taxi 12 may do little more than designate a destination to operate the automated-taxi 12, and there is no human operator who 'drives' the automated-taxi 12. However, full automation is not a requirement. It is contemplated that the teachings presented herein are useful when the automated-taxi 12 is operated in a manual-mode where the degree or level of automation may be little more than providing an audible or visual warning to a human-operator who is generally in control of the steering, accelerator, and brakes of the automated-taxi 12. For example, the system 10 may merely assist the human-operator as needed to change lanes and/or avoid interference with and/or a collision with, for example, an object such as an other-vehicle, a pedestrian, or a road sign.

As will be explained in more detail below, an inventive aspect of the system 10 or the automated-taxi 12 is that the client 14 (e.g. a passenger or customer) of the automated-taxi 12 brings (i.e. carries or otherwise transports) and connects to the automated-taxi 12, a personal-battery, hereafter referred to as the charged-battery 16. The charged-battery 16 is used by the automated-taxi 12 as at least one source of electrical energy to operate (e.g. propel using an electric-motor) the automated-taxi 12. It was observed that battery technology has developed to a point where sufficient energy (e.g. 2.5kWh) to propel or assist with the propulsion of a small vehicle for a useful distance (e.g. 4km) can be stored in a relatively light-weight (e.g. 5kg) battery. It is expected that the stored-energy to weight ratio will continue to increase over time. Accordingly, the charged-battery 16, which is carried to the automated-taxi 12 by the client 14 may be part of the system 10.

The system 10 includes a power-connection 18 used to establish an electrical-connection between the automated-taxi 12 and the charged-battery 16 that was brought to the automated-taxi 12 by the client 14 of the automated-taxi 12. That is, the power-connection 18 provides or establishes a means for electrical energy to be transferred from the charged-battery 16 to the automated-taxi 12. It is contemplated that electrical energy may be transferred in the reverse direction, that being to the charged-battery 16 from the automated-taxi 12, in certain circumstances such as during regenerative braking of the automated-taxi 12, or if the automated-taxi is stopped over a wireless power transfer device used for electrically charging an energy storage device, such as the battery pack of an electric or hybrid electric vehicle, as will be recognized by those in the art. As mentioned above, the charged-battery 16 provides electrical-energy to propel the automated-taxi 12 while the charged-battery is connected to the automated-taxi 12. The power-connection 18 may be a wired or physical contact (i.e. via a connector), or may be comparable to the aforementioned wireless power transfer device.

The charged-battery 16 may include handles or shoulder-straps to provide a comfortable means for the client 14 to transport the charged-battery 16 to the automated-taxi. Another option is to equip a briefcase or carry-on type bag with wheels, and have a storage-compartment or attachment means to secure the charged-battery 16 so that the charged-battery 16 can be towed on those wheels rather than carried by the client 14. The charged-battery 16 may also include known circuitry that, for example, monitors the health of the energy-storage aspects of the charged-battery 16, limits the rate at which the energy-storage aspects of the charged-battery 16 are charged or discharged, and/or indicates a percentage of charge of the energy-storage aspects of the charged-battery 16.

The system 10 includes a controller-circuit 20 in communication with the power-connection 18, so thereby in communication with the charged-battery 16 when connected to the power-connection 18. The communication may be by way of wires, optical-fiber, or wireless communication such as radio-frequency (RF) or infrared (IR) communications. The controller-circuit 20, hereafter sometimes referred to as the controller 20, may include one or more instances of a processor 22 such as one or more instances of a microprocessor or other control circuitry such as analog and/or digital control circuitry including an application specific integrated circuit (ASIC) for processing data as should be evident to those in the art. While the system 10 described herein is generally described in terms of having a single instance of the controller 20, it is recognized that the functions of the controller 20 may be shared or distributed among several instances of controllers that are each configured for some specific task. Hereafter, any reference to the controller 20 being configured for something is to also be interpreted as suggesting that the processor 22 may also be configured for the same thing. It is also recognized that there may be multiple instances of processors in any instance of the controller 20. The controller 20 may include memory 24, i.e. non-transitory computer-readable storage-medium, including non-volatile memory, such as electrically erasable programmable read-only memory (EEPROM) for storing one or more routines, thresholds, and captured data. The memory 24 may be part of the processor 22, or part of the controller 20, or separate from the controller 20 such as remote memory stored in the cloud. The one or more routines may be executed by the controller 20 or the processor 22 to perform steps for operating the automated-taxi 12 based on signals received by the controller 20 from, for example, a vehicle perception-sensor (not show) or object-detector (not shown) as will be recognized by those in the art.

The controller-circuit 20 is configured to assess a fee 26 for transporting the client 14 to a destination 28 by the automated-taxi 12. By way of example and not limitation, the fee 26 may be charged to a credit-card of client 14, or the fee 26 may be paid by means of a funds-transfer from a bank account of the client 14, or the fee may be added to a cumulative bill that is periodically (e.g. monthly) sent to the client 14. The fee 26 is determined in accordance with, but not limited to, an energy-value 30 (e.g. how many kilo-Watt-hours or kWh) drawn from the charged-battery 16 while the client 14 is being transported. That is, the fee 26 charged to the client 14 is reduced when the client 14 provides the charged-battery 16 to help propel the automated-taxi 12 when compared to the fee for transporting the client to the destination 28 without the assistance or benefit of the charged-battery 16.

However, this is not the only basis on which the fee 26 may be determined or adjusted. By way of further non-limiting examples, the determination of the fee 26 for transporting the client 14 to the destination 28 may include consideration of the distance traveled to reach the destination 28, the time-of-day (e.g. higher fees during rush hours), how much baggage or luggage the client 14 brings on-board the automated-taxi, and/or how many other clients are on-board with the client 14. That is, the fee may be increased if the client 14 requests/requires that no other clients are allowed to board the automated-taxi until after the automated-taxi 12 arrives at the destination 28.

As suggested above, the controller-circuit 20 is configured to vary the fee 26 inversely proportional to the energy-value 30. That is, the fee 26 is decreased as energy-value 30 increases. In other words, the greater the energy-value 30, the lower the fee 26. Alternatively, rather than a direct adjustment of the fee 26, the system 10 may provide a credit (i.e. free ride) or discount towards the next time the client 14 rides in the automated-taxi 12, or another instance of automated-taxi that is part of a fleet of automated-taxis.

It is also contemplated that the system 10 may organized the travel-route of the automated-taxi 12 in accordance with reservations by clients 14 who are willing to transport/carry an instance of the charged-battery 16 to the automated-taxi 12 so instances of energy charging stop requirements at a charging facility are minimized. It is also contemplated that the automated-taxi 12 be equipped with a means to indicate on outside of the automated-taxi 12, or otherwise convey, when an onboard discharge station is available for a charged-battery 16 to be connected, and thereby attract the attention of those clients who are in possession of an instance of the charged-battery 16 to the AMOD. Alternatively, a client who has a charged-battery may want to wait for another AMOD that has a discharge station available so the client can receive a reduced fee. It is also contemplated that the automated-taxi 12 may not accept a client 14 unless the client 14 has a charged-battery 16 because the other sources of electrical energy on board the automated-taxi are almost exhausted.

To determine or measure the energy-value 30, the system 10 may include an energy-monitor 32 used by the controller 20 or the processor 22 to determine the energy-value 30. The energy-monitor 32 may be part of the charged-battery 16, part of the power-connection 18 as suggested in Fig. 1, or part of a power-management-system (not shown) of the automated-taxi 12. The energy-monitor 32 may include a current-measuring-device and/or a voltage-measuring-device and/or a microprocessor configured to determine the energy-value 30. Those in the battery-charge management arts will recognize that there are numerous known configurations and combinations of hardware and software that are able to determine the energy-value 30.

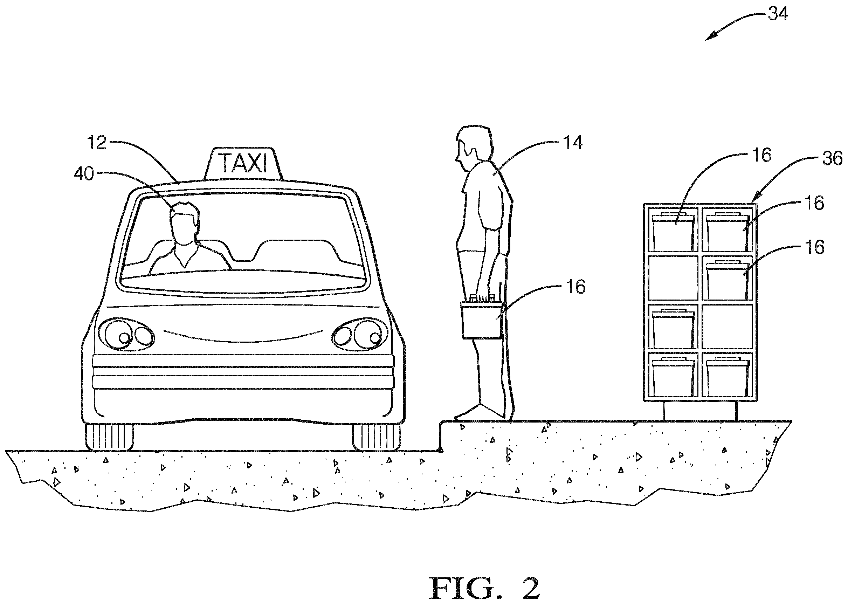

Fig. 2 illustrates a non-limiting example of a scenario 34 where a client 14 has taken a charged-battery 16 from a charging-station 36 and is carrying the charged-battery 16 to the automated-taxi 12 in preparation to be transported by the automated-taxi 12 to the destination 28 of the client 14. The charged-battery 16 will likely be connected to an instance of the power-connection 18 (Fig. 1) that may be one of multiple power-connections in the automated-taxi 12. As the automated-taxi 12 drives to the destination 28, the charged-battery 16 is drained and likely eventually becomes a discharged-battery 38. When the client 14 boards the automated-taxi 12, there may already be an instance of a discharged-battery 38 in the automated-taxi which may have been provided by an other-client 40 who boarded the automated-taxi 12 at some location other than that depicted in Fig. 2. That is, the other-client 40 may have provided a fully charged battery when the other-client 40 initially boarded the automated-taxi, but that battery is now depleted, i.e. is now characterized as the discharged-battery 38, so the discharged-battery 38 may be exchanged for the charged-battery 16 provided by the client 14. When the automated-taxi 12 arrives at the destination of the client 14, the client 14 may exit the automated-taxi 12 with the discharged-battery 38, i.e. a different battery-pack than the one that the client 14 brought to the automated-taxi 12.

As suggested above, the system 10 includes a charging-station 36 where the client 14 picks-up the charged-battery 16 and/or deposits the discharged-battery 38 taken from the automated-taxi 12. The charging-stations 36 may be configured to simultaneously charge multiple battery-packs that may have been deposited in the charging-stations 36 at different times. As such, some of the battery-packs in the charging-station 36 may not be fully charged so are not characterized as an instance of the charged-battery 16, i.e. they may be partially charged. The charging-station 36 may include lights and/or a display (not shown) that indicate which of the battery-packs are fully charged, and/or a means by which a battery-pack cannot be removed unless it is fully charged. It is contemplated that the client may have to pay for the use of the charged-battery 16, and there may be a security deposit collected when the client takes the charge-battery. However, if the client 14 owns or has already paid a rental fee for the use of a battery-pack, the client 14 may then be free to charge the battery-pack by any means available such as, but not limited to, connecting the battery-pack to a solar panel.

The charging-station 36 may be located proximate to an AMOD pick-up/drop-off kiosk where clients can hail an instance of the automated-taxi 12 as the automated-taxi 12 approaches the kiosk or otherwise becomes available. Alternatively, the charging-station 36 may be located at a place of employment where the client 14 works so an instance of the discharge-battery 38 can be charged and ready for use when the client leaves work. Similarly, the client 14 may have a changing station at home so the battery-pack is charged and ready for use when the client 14 leaves home to go to work.

The controller-circuit 20 may also be configured to operate (i.e. autonomously drive) the automated-taxi 12 to transport the client to the destination by operating known vehicle-controls such as the steering, accelerator, and brakes of the automated-taxi 12. It is also contemplated that the controller-circuit 20 may be configured to receive the destination from the client in one or more ways, including but not limited to, a voice-command, or a message sent from a smart phone operated by the client 14.

Accordingly, a transportation system (the system 10), and a controller 20 for the system 10 are provided. Clients of an automated-taxi 12 can reduce the fee 26 paid for transportation by the automated-taxi 12 by providing some or all of the electrical energy needed to propel the automated-taxi via the charged-battery 16. Providing the charged-battery 16 is not necessarily a requirement for the client 14 to be transported by the automated-taxi 12, although the fee 26 charged to the client 14 may be higher because the client 14 failed to provide the charged-battery 16.

While this invention has been described in terms of the preferred embodiments thereof, it is not intended to be so limited, but rather only to the extent set forth in the claims that follow.

## Claims

1. A transportation system (10) for operating an automated-taxi (12), said system (10) comprising:
a power-connection (18) used to establish an electrical-connection between an automated-taxi (12) and a charged-battery (16) that was brought to the automated-taxi (12) by a client (14) of the automated-taxi (12), wherein said charged-battery (16) provides electrical-energy to propel the automated-taxi (12) while connected; and
a controller-circuit (20) in communication with the power-connection (18), said controller-circuit (20) configured to assess a fee (26) for transporting the client (14) to a destination (28) by the automated-taxi (12), said fee (26) determined in accordance with an energy-value (30) drawn from the charged-battery (16) while the client (14) is being transported.

2. The system (10) in accordance with claim 1, wherein the controller-circuit (20) is configured to vary the fee (26) inversely proportional to the energy-value (30).

3. The system (10) in accordance with any of the previous claims, wherein the system (10) includes an energy-monitor (32) used to determine the energy-value (30).

4. The system (10) in accordance with any of the previous claims, wherein the system (10) includes a discharged-battery (38) in the automated-taxi (12), and the discharged-battery (38) is exchanged for the charged-battery (16) by the client (14).

5. The system (10) in accordance with any of the previous claims, wherein the controller-circuit (20) is configured to operate the automated-taxi (12) to transport the client (14) to the destination (28).

6. A transportation system (10), said system (10) comprising:
an automated-taxi (12) comprising;
a power-connection (18) used to establish an electrical-connection between the automated-taxi (12) and a charged-battery (16) that was brought to the automated-taxi (12) by a client (14) of the automated-taxi (12), wherein said charged-battery (16) provides electrical-energy to propel the automated-taxi (12) while connected; and
a controller-circuit (20) in communication with the power-connection (18), said controller-circuit (20) configured to assess a fee (26) for transporting the client (14) to a destination (28) by the automated-taxi (12), said fee (26) determined in accordance with an energy-value (30) drawn from the charged-battery (16) while the client (14) is being transported.

7. The system (10) in accordance with claim 6, wherein the controller-circuit (20) is configured to vary the fee (26) inversely proportional to the energy-value (30).

8. The system (10) in accordance with any of the previous claims, wherein the system (10) includes an energy-monitor (32) used to determine the energy-value (30).

9. The system (10) in accordance with any of the previous claims, wherein the system (10) includes a discharged-battery (38) in the automated-taxi (12), and the discharged-battery (38) is exchanged for the charged-battery (16) by the client (14).

10. The system (10) in accordance with any of the previous claims, wherein the controller-circuit (20) is configured to operate the automated-taxi (12) to transport the client (14) to the destination (28).

11. A controller-circuit (20) for an automated-taxi (12), said controller-circuit (20) comprising:
a power-connection (18) used to establish an electrical-connection between an automated-taxi (12) and a charged-battery (16) that was brought to the automated-taxi (12) by a client (14) of the automated-taxi (12), wherein said charged-battery (16) provides electrical-energy to propel the automated-taxi (12) while connected; and
a processor (22) in communication with the power-connection (18), said processor (22) configured to assess a fee (26) for transporting the client (14) to a destination (28) by the automated-taxi (12), said fee (26) determined in accordance with an energy-value (30) drawn from the charged-battery (16) while the client (14) is being transported.

12. The controller-circuit (20) in accordance with claim 11, wherein the processor (22) is configured to vary the fee (26) inversely proportional to the energy-value (30).

13. The controller-circuit (20) in accordance with any of the previous claims 11 or 12, wherein the controller-circuit (20) includes an energy-monitor (32) used to determine the energy-value (30).

14. The controller-circuit (20) in accordance with any of the previous claims 11 to 13, wherein the controller-circuit (20) includes a discharged-battery (38) in the automated-taxi (12), and the discharged-battery (38) is exchanged for the charged-battery (16) by the client (14).

15. The controller-circuit (20) in accordance with any of the previous claims 11 to 14, wherein the processor (22) is configured to operate the automated-taxi (12) to transport the client (14) to the destination (28).
